Europäisches Patentamt

(19) European Patent Office

Office européen des brevets

(11) Numéro de publication : **0 434 503 A1**

# (12) DEMANDE DE BREVET EUROPEEN

(21) Numéro de dépôt : **90403543.3**

(22) Date de dépôt : **12.12.90**

(51) Int. Cl.$^5$ : **G01S 13/28, G01S 13/524, G01S 13/22, G01S 13/30**

(30) Priorité : **19.12.89 FR 8916789**

(43) Date de publication de la demande :
**26.06.91 Bulletin 91/26**

(84) Etats contractants désignés :
**DE GB**

(71) Demandeur : **LE CENTRE THOMSON
D'APPLICATIONS RADARS - LCTAR
6, rue Nieuport
78143-Vélizy-Villacoublay (FR)**

(72) Inventeur : **Debuisser, Jean-Claude
THOMSON-CSF SCPI Cédex 67
F-92045 Paris la Défense (FR)**

(74) Mandataire : **Albert, Claude et al
THOMSON-CSF SCPI
F-92045 PARIS LA DEFENSE CEDEX 67 (FR)**

(54) **Procédé et système radar cohérent à impulsions pour la détection d'une cible présentant des éclairs de très courte durée.**

(57)    L'invention concerne un procédé et un système radar cohérent à impulsions pour la détection d'une cible présentant des éclairs de très courte durée

Ce système radar comprend un émetteur (3, 4, 5) pour émettre des impulsions cohérentes non équidistantes formant un motif périodique et se distinguant l'une de l'autre par une modulation de phase selon des lois différentes quasi-orthogonales, l'espacement moyen entre impulsions étant de l'ordre de grandeur de la durée minimum des éclairs. A la réception, le système comprend un récepteur unique (7) et un dispositif (8) d'élimination cohérente du fouillis et des échos de corps des cibles, suivis de N voies de traitement à compression d'impulsion (9.1 à 9.N) par corrélation avec les lois de modulations en phase particulières. Les sorties des voies de traitement sont envoyées à un dispositif (11) d'élimination de pics secondaires dus aux ambiguïtés partielles.

L'invention s'applique aux systèmes radar de surveillance pour la détection d'hélicoptères.

FIG_6

EP 0 434 503 A1

## PROCEDE ET SYSTEME RADAR COHERENT A IMPULSIONS POUR LA DETECTION D'UNE CIBLE PRESENTANT DES ECLAIRS DE TRES COURTE DUREE

La présente invention se rapporte à un procédé et un système radar cohérent à impulsions sans ambiguïté de distance pour la détection d'une cible présentant des éclairs de très courte durée et de période élevée, notamment des hélicoptères.

Certains radars de surveillance cherchent particulièrement à détecter des cibles en agitation dont la surface équivalente radar peut n'être suffisamment forte pour être détectable que pendant des moments de très courte durée. Cela peut être le cas par exemple pour des hélicoptères que l'on veut reconnaître en tant que tels. En effet, on sait qu'une caractéristique essentielle des hélicoptères, du point de vue de la surface équivalente radar, est que les pales de leur rotor principal fournissent une surface équivalente très importante seulement lorsqu'elles sont dans le voisinage d'un plan perpendiculaire à la direction radar-hélicoptère. Cette configuration se répète périodiquement avec une période de valeur élevée, par exemple de l'ordre d'une vingtaine à une centaine de millisecondes, mais ne dure qu'un temps très court, donnant lieu par exemple à un "éclair" d'une durée de l'ordre de 50 à 200 microsecondes.

Pour qu'un radar du type à impulsions ait une probabilité suffisante de détecter ces pales, il faut choisir un espacement entre impulsions du même ordre de grandeur que la durée des éclairs de pale. Si on utilise un radar à impulsions périodiques, ce qui est nécessaire pour pouvoir éliminer convenablement les échos parasites, on doit alors utiliser des périodes de répétition conduisant à des distances maximum non ambiguës de l'ordre d'une vingtaine de kilomètres, donc trop faibles dans de nombreux cas pour la couverture en distance recherchée.

Une première solution envisagée est d'utiliser des impulsions à fréquence de répétition élevée et, pour lever les ambiguïtés en distance, d'émettre successivement des rafales d'impulsions à périodes de répétition différentes. Un inconvénient de cette solution est qu'on augmente beaucoup le temps d'observation de la cible nécessaire, d'où une quasi-impossibilité de réaliser un pistage de la cible.

Une autre solution connue, décrite par exemple dans le brevet français N° 77 38830, consiste à utiliser des blocs d'impulsions à fréquence de répétition constante différente d'un bloc à l'autre ces blocs étant entrelacés et les impulsions d'un bloc étant reconnues par leur fréquence porteuse, différente d'un bloc à l'autre. Mais dans ce cas aussi, pour lever l'ambiguïté en distance, le temps d'observation est long.

Une solution dérivée de celle-ci consisterait à utiliser des rafales entrelacées à basse fréquence de répétition constante (donc sans ambiguïté distance pour la couverture radar envisagée), chaque rafale utilisant une fréquence porteuse différente. Cependant cette solution, tout comme la précédente, nécessite N émetteurs et N récepteurs à fréquence porteuse différente, ce qui implique un matériel complexe, encombrant et coûteux.

L'invention a pour but de remédier à ces inconvénients en partant de la constatation que les éclairs de pale sont rares dans le temps et en distance car il y a généralement peu d'hélicoptères dans le domaine de surveillance d'un radar. Ceci entraîne qu'on peut tolérer des ambiguïtés partielles en distance.

Conformément à l'invention, au lieu d'utiliser des fréquences porteuses différentes, on va différencier les impulsions d'un motif périodique en leur appliquant des modulations de phase différentes et de préférence pseudo-orthogonales (à intercorrélation faible), la modulation étant cohérente pour l'ensemble des impulsions.

Selon l'invention, il est donc prévu un procédé pour la détection sans ambiguïté de distance, par un radar cohérent à impulsions, d'une cible présentant des éclairs de très courte durée et de période élevée, notamment des hélicoptères, caractérisé en ce qu'il consiste à :

— émettre périodiquement un motif de N impulsions ayant toutes la même fréquence porteuse, cohérentes entre elles et modulées chacune en phase par une loi différente, lesdites impulsions d'un motif étant espacées entre elles de durées toutes différentes, voisines de la période du motif divisée par N et du même ordre de grandeur que la durée desdits éclairs ;

— recevoir lesdites impulsions par un récepteur unique suivi de N voies de traitement adaptées respectivement auxdites lois de modulation pour effectuer une compression d'impulsion ; et

— éliminer les pics secondaires reçus par comparaison des niveaux reçus dans chacune des voies.

Un des avantages d'un tel procédé est qu'on peut utiliser un émetteur et un récepteur uniques, le récepteur étant suivi de N sous-récepteurs ou voies de traitement des signaux correspondant aux diverses impulsions.

L'invention sera mieux comprise et d'autres caractéristiques et avantages apparaîtront à l'aide de la description ci-après et des dessins joints où :

— la figure 1 représente des diagrammes explicatifs ;

— la figure 2 montre le diagramme des impulsions émises selon l'invention ;

— la figure 3 représente des diagrammes d'ambiguïté explicatifs de l'invention ;

— la figure 4 représente une série de courbes définissant les paramètres jouant sur le temps d'observabilité du radar selon l'invention ;

– la figure 5 montre des courbes explicatives du choix des espacements d'impulsions selon l'invention ;

– la figure 6 est le schéma de principe d'un système radar selon l'invention ;

– la figure 7 représente des diagrammes explicitant le principe d'élimination des pics secondaires selon l'invention ;

– la figure 8 est le schéma d'un dispositif d'élimination des pics secondaires utilisable dans le système selon l'invention ;

– la figure 9 est le détail d'un circuit du dispositif de la figure 8 ; et

– la figure 10 est le schéma détaillé d'un dispositif de calcul de seuil utilisé dans le dispositif de la figure 8.

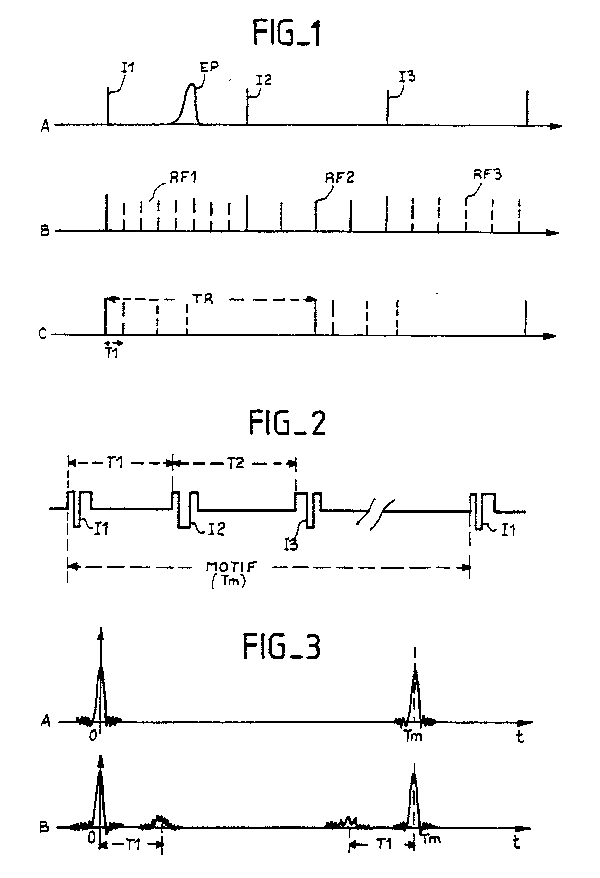

Comme on l'a déjà expliqué dans l'introduction de la présente description, si, dans un radar à impulsions périodiques, l'espacement entre impulsions I1, I2, I3 est trop important par rapport à la durée d'un éclair de pale EP (courbe A de la figure 1), on risque de ne pas détecter cet éclair si aucune impulsion n'est présente au moment où la surface équivalente radar de la pale est élevée. Une des solutions possibles à ce problème consiste à émettre des rafales d'impulsions RF1, RF2 ... à fréquence de répétition différente et élevée (diagramme B de la figure 1), ce qui entraîne, comme on l'a indiqué, un temps d'observation trop long pour certaines applications.

Selon l'invention et comme schématisé sur la figure 2, on émet un motif périodique de N impulsions I1, I2, I3 (pour simplifier les figures on a choisi N=3) ayant toutes la même fréquence porteuse, cohérentes entre elles, mais chacune modulée en phase par une loi différente. De plus, ces impulsions sont séparées par des durées T1, T2 ... toutes différentes mais voisines de la période Tm du motif divisée par N. Cette période moyenne Tm/N est choisie de l'ordre de grandeur de la durée minimum des éclairs à détecter. La période Tm du motif est choisie de telle sorte qu'elle corresponde à une ambiguïté en distance supérieure à la couverture en distance recherchée.

On choisit des lois de modulation en phase pseudo-orthogonales, c'est-à-dire ayant de faibles valeurs de fonction d'intercorrélation. Ceci est important pour un bon fonctionnement du système ainsi qu'on le verra ci-dessous.

Un système radar utilisant ce principe selon l'invention ne comporte qu'un seul émetteur, émettant les impulsions successives à la même fréquence porteuse mais avec une modulation de phase adéquate, et un seul récepteur suivi de N voies de traitement du signal correspondant chacune à une voie de compression d'impulsion particulière, c'est-à-dire à une impulsion du motif.

Le filtrage d'élimination des échos parasites s'effectue de motif à motif et a donc la même efficacité que dans un radar sans ambiguïté de distance à impulsions périodiques.

Cependant le système radar selon l'invention présente des ambiguïtés partielles en distance. En effet, comme les lois de modulation de phase ne sont pas parfaitement orthogonales (produits d'intercorrélation non égaux à zéro), un écho d'éclair de pale correspondant à une impulsion particulière va donner un pic principal dans la voie correspondante mais aussi des pics secondaires non nuls dans les autres voies.

Ceci est schématisé sur la figure 3 où est représenté en A le diagramme d'ambiguïté d'un sous-récepteur (ou voie de traitement) seul avec ses pics principaux et en B le diagramme d'ambiguïté d'un sous-récepteur en présence d'un autre, par exemple ceux correspondant aux impulsions I1 et I2. On se trouve alors en présence de pics secondaires espacés de T1 des pics principaux qui correspondent à des ambiguïtés partielles en distance. Cependant, compte tenu des caractéristiques de pseudo-orthogonalité choisies pour les lois de modulation, les pics secondaires sont d'amplitude suffisamment faible pour être éliminés par comparaison des amplitudes reçues à chaque instant dans les diverses voies de traitement, comme on le verra ci-dessous.

Un autre problème qui se pose est dû au fait que pendant l'émission de chaque impulsion par l'émetteur, toutes les voies de traitement sont occultées. Si on veut éviter d'avoir une zone en distance complètement aveugle, il faut donc éviter d'avoir un espacement constant entre impulsions successives. Par contre on peut parfaitement tolérer que, pour toute distance donnée, une ou quelques voies de traitement soient aveugles si les autres ne le sont pas. Ceci amène à définir des lois possibles de répartition des espacements entre impulsions successives qui répondent aux impératifs ci-dessus.

On va maintenant définir à titre d'exemple une loi de répartition de ces espacements qui est simple à mettre en oeuvre et efficace.

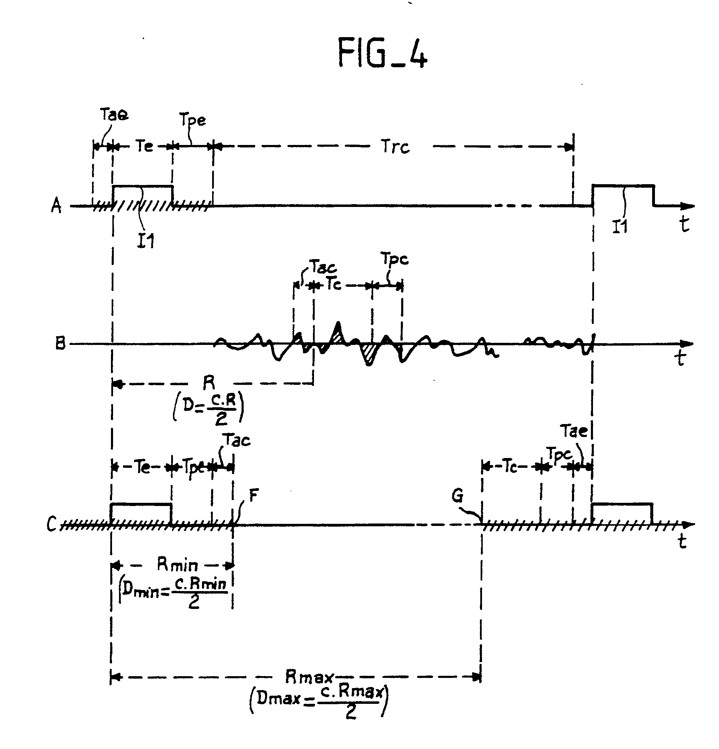

Pour cela, on va d'abord définir en relation avec la figure 4 un certain nombre de paramètres importants.

Le diagramme A représente ce qui se passe pour le système radar lors de l'émission d'une impulsion. Toutes les voies de traitement sont occultées non seulement pendant la durée Te de l'impulsion émise, par exemple I1, mais aussi pendant un temps Tae de préémission et un temps Tpe de postémission. Le temps de réception est donc Trc.

De même, dans chaque sous-récepteur ou voie de traitement, la corrélation avec la loi de modulation s'effectue pour un retard R correspondant à une distance D = c.R/2 (c vitesse de l'onde électro-magnétique) sur une durée Tc égale à Te qui doit être précédée d'un temps de précorrélation Tac et suivie d'un temps de postcorrélation Tpc (diagramme B de la figure 4).

Le diagramme C permet alors de définir le champ d'observabilité du système radar pour la voie considérée. Une corrélation ne peut être effectuée correctement et une cible détectée qu'entre une distance minimum $Dmin = c.Rmin/2$ où $Rmin = Te + Tpe + Tac$ (point F) et une distance maximum $Dmax = c.Rmax/2$ limitée au point G précédant le début de l'impulsion suivante d'un délai égal à $Tc + Tpc + Tae$. On définit ainsi pour chaque impulsion un domaine d'inobservabilité de durée $Tc + Tpc + Tae + Te + Tpe + Tac$.

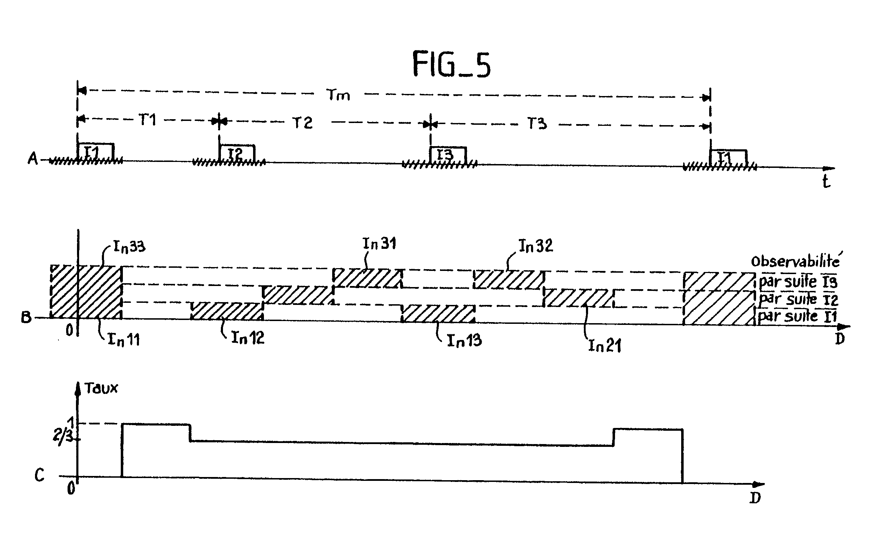

Cela étant, on a représenté sur la figure 5, le diagramme de temps d'un motif à trois impulsions I1, I2, I3 (trois impulsions seulement pour la clarté des figures). La durée du motif est Tm. Chaque impulsion est séparée de la suivante par un espacement différent, respectivement T1, T2 et T3. Chaque impulsion définit un domaine d'inobservabilité représenté par des hachures. Si on appelle Tq la durée d'un tel domaine et qu'on choisit Tq comme pas de quantification des temps, on exprime les durées Ti (i égal à 1, 2 ou 3) par des nombres. Si ces nombres sont convenablement choisis, on voit d'après le diagramme B de la figure 4 qu'on peut arriver à ce qu'aucun des domaines d'inobservabilité de chacune des voies ne se chevauche, excepté au début de chaque motif ce qui est inévitable. Pour obtenir ce résultat, il suffit de choisir les espacements tels que tous les nombres Ti, Ti + Ti⊕1, Ti + Ti⊕1 + Ti⊕2 ..., Ti + Ti⊕1 + ... + Ti⊕Nθ2 soient différents, les symboles ⊕ et θ représentant des additions et des soustractions modulo N. Sur le diagramme B, les zones hachurées In 11, In 12, In 13 représentent les domaines d'inobservabilité par la suite d'impulsions I1 de la voie 1, etc ...

Le diagramme C représente en conséquence le taux d'observabilité des distances D. En fonction du nombre N de voies et du choix des espacements, on peut régler le taux d'observabilité minimum.

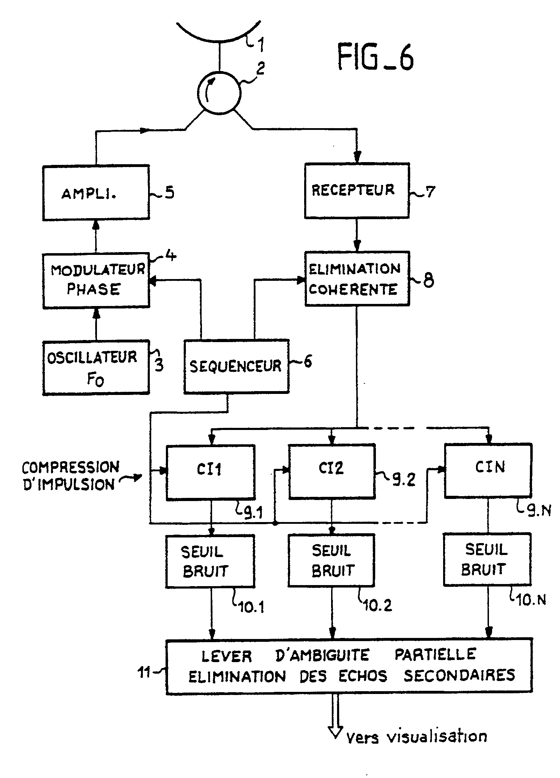

La figure 6 représente le schéma d'un système radar mettant en oeuvre les principes mentionnés ci-dessus. Le système radar comporte une antenne commune émission-réception 1 reliée à un circulateur 2. L'émetteur relié à ce circulateur est constitué d'un oscillateur 3 à la fréquence porteuse $F_o$, d'un modulateur de phase 4 et d'un amplificateur 5. L'onde fournie par l'oscillateur 3 est modulée en impulsions et, à l'intérieur de chaque impulsion, en phase sous le contrôle d'un séquenceur 6 qui synchronise les impulsions et fournit les lois de modulation (codes) adéquates.

Le circulateur 2 est également relié à des moyens de réception uniques comportant le récepteur 7 et le dispositif 8 d'élimination cohérente des échos de fouillis et de l'écho de corps des cibles par filtrage linéaire. Un tel dispositif peut être par exemple un filtre à traitement autorégressif du signal. Ce filtre comporte de manière connue un filtre en treillis d'ordre 1 et un calculateur de coefficient $\vec{a}_{n-1}$ du filtre en treillis. De manière connue, le calcul du coefficient de filtrage peut s'effectuer de manière récursive à partir du coefficient de la récurrence précédente et d'un estimé du coefficient à la récurrence considérée. Comme on le sait, le filtre en treillis fournit, pour chaque cellule de résolution, des signaux direct $\vec{p}_n$ et rétrograde $\vec{r}_n$ selon les relations :

$$\vec{P}_n = \vec{y}_n - \vec{a}_{n-1} \vec{y}_{n-1}$$

$$\vec{r}_n = \vec{y}_{n-1} - \vec{a}^*_{n-1} \vec{y}_n$$

où $\vec{y}_n$ est le signal d'entrée de la récurrence n et le symbole * signifie "conjugué de ".

Ces signaux $\vec{P}_n$ et $\vec{r}_n$ sont porteurs de la même information concernant les éclairs mais l'écho de corps de la cible a été éliminé. On peut réaliser une intercorrélation entre ces signaux $\vec{P}_n$ et $\vec{r}_n$ pour obtenir le signal de sortie du dispositif 8.

Ce signal de sortie est appliqué en parallèle à N voies de traitement correspondant chacune à une impulsion particulière du motif, c'est-à-dire à une compression d'impulsion particulière à partir de la loi de modulation en phase correspondante. Chaque voie de traitement comporte un dispositif 9.1 à 9.N de compression d'impulsion (CI1 à CIN), qui reçoit du séquenceur 6 la réplique de la loi de modulation de phase utilisée à l'émission pour effectuer une corrélation avec le signal reçu, et un circuit à seuil 10.1 à 10.N destiné à éliminer le bruit. Les amplitudes sous forme numériques fournies à ces circuits à seuil sont mises à zéro si elles sont inférieures au seuil de bruit.

Les sorties des N voies sont appliquées à un dispositif 11 d'élimination de pics secondaires dus aux ambiguïtés partielles. Ce dispositif est destiné à ne retenir que les signaux correspondant à une détection effective d'éclair de pale, c'est-à-dire les pics principaux. Ces pics principaux détectés sont envoyés vers des moyens de visualisation non représentés.

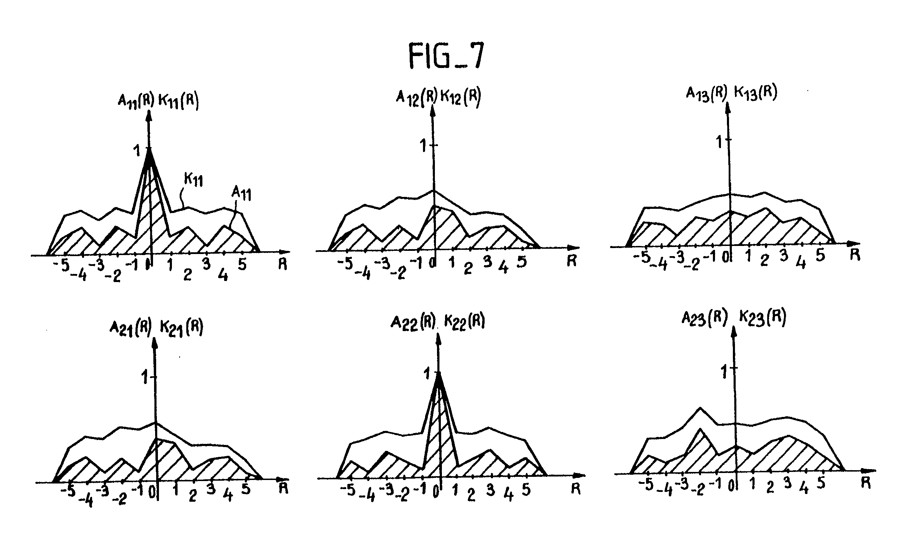

La figure 7 permet de mieux comprendre les principes sur lesquels se base le fonctionnement du dispositif 11. Toujours en supposant pour simplifier qu'il n'y a que trois voies, les diagrammes de la première ligne de la figure 7 représentent, dans le cas d'un pic principal dans la voie 1 (écho d'éclair de pale pour l'impulsion I1), l'amplitude $A_{11}$ (R) du signal comprimé dans la voie 1 correspondant à la fonction d'autocorrélation pour la loi de modulation de l'impulsion I1, R étant le retard, et les amplitudes $A_{1j}$(R) dans les

voies 2 et 3 correspondant aux fonctions d'intercorrélation de la loi de modulation de I1 avec les lois correspondantes dans les voies 2 et 3, qui traduisent le signal reçu dans les voies 2 et 3 pour un éclair détecté dans la voie 1.

Des diagrammes similaires ont été représentés sur la deuxième ligne de diagrammes de la figure 7 dans le cas où un pic principal est détecté dans la voie 2.

A partir de ces diagrammes, on constate que, lorsqu'un pic principal est détecté dans une voie, les amplitudes dans les autres voies au même instant R = 0 sont notablement plus faibles. On peut alors définir pour chaque voie un ensemble de coefficients de seuil $K_{ij}(R)$ permettant de calculer des seuils $S_{ij}(R) = A_i \cdot K_{ij}(R)$ pour une amplitude maximum $A_i$ trouvée dans la voie i et qui, si cette amplitude est bien celle d'un pic principal, sont tous supérieurs aux amplitudes correspondantes $A_{ij}(R)$ des diverses voies. Si tel n'est pas le cas, l'amplitude maximum rencontrée ne correspond pas à un pic principal.

On peut noter qu'en règle générale $A_{ij}(R) = A_{ji}(R)$ ce qui entraîne :

$$K_{ij}(R) = K_{ji}(R)$$

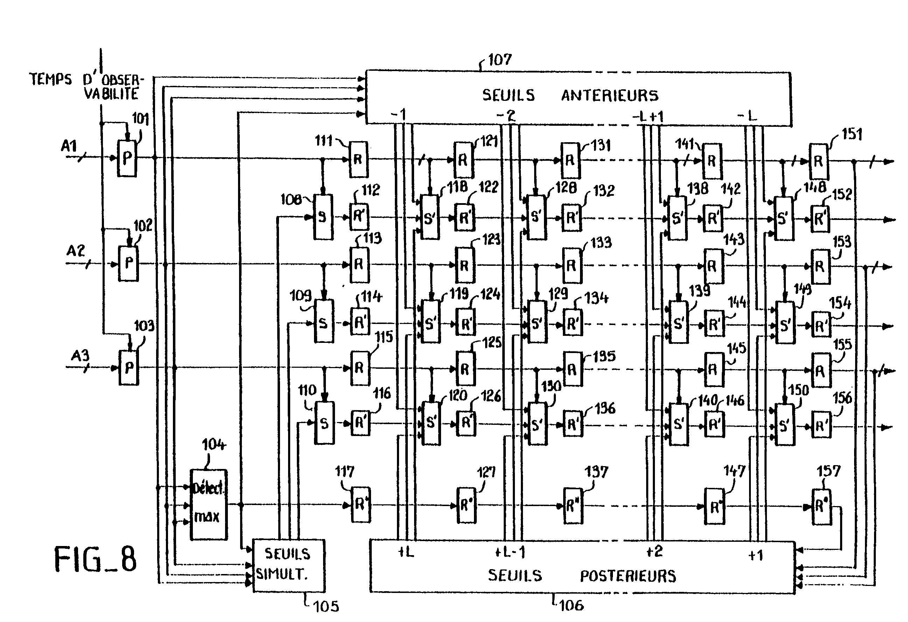

A partir de là, il est possible de concevoir un dispositif d'élimination de pics secondaires tel que celui représenté sur la figure 8.

Les amplitudes A1, A2, A3 présentes en sortie de chacune des voies de traitement à chaque temps élémentaire (moment des lois de modulation) sont d'abord appliquées à des portes P de validation 101 à 103 commandées par les temps d'observabilité de chaque suite d'impulsions I1, I2 ou I3 (voir figure 5). Pendant les temps d'observabilité, les amplitudes sont transmises sans modification et, pendant les temps d'inobservabilité, les portes P transmettent une valeur zéro. Après passage dans les portes 101 à 103, les amplitudes sont appliquées à des circuits du type registre à décalage comportant L+1 registres 111, 121 ... 151 pour la voie 1, 113, 123 ... 153 pour la voie 2, etc ..., où L est le nombre de moments de chaque loi de modulation, la progression dans ces registres s'effectuant au rythme des temps élémentaires.

Par ailleurs, les amplitudes des trois voies sont appliquées à un circuit 104 détecteur de maximum qui fournit sur sa sortie le rang i de la voie présentant l'amplitude maximum à l'instant considéré. Ces amplitudes sont aussi appliquées à un circuit 105 de calcul de seuils dits simultanés qui fournit en réponse au rang et à la valeur de l'amplitude maximum des seuils $S_{ij}(0)$ correspondant aux coefficients à l'instant 0 de l'une des trois configurations possibles (figure 5) selon la voie présentant un maximum. Ces seuils sont comparées aux amplitudes $A_i$ dans les comparateurs S respectifs 108 à 110 pour fournir un bit de détection D égal à 1 si le seuil est égal ou inférieur à l'amplitude correspondante et à 0 si le seuil est supérieur. Ce bit est ensuite transmis à l'étage suivant par l'intermédiaire d'un registre R' 112, 114, 116. Tous les autres étages sont ensuite identiques et comprennent chacun un circuit de comparaison S' (par exemple 118 à 120 pour l'étage 1) suivi d'un registre R' (par exemple 122, 124, 126 pour l'étage 1).

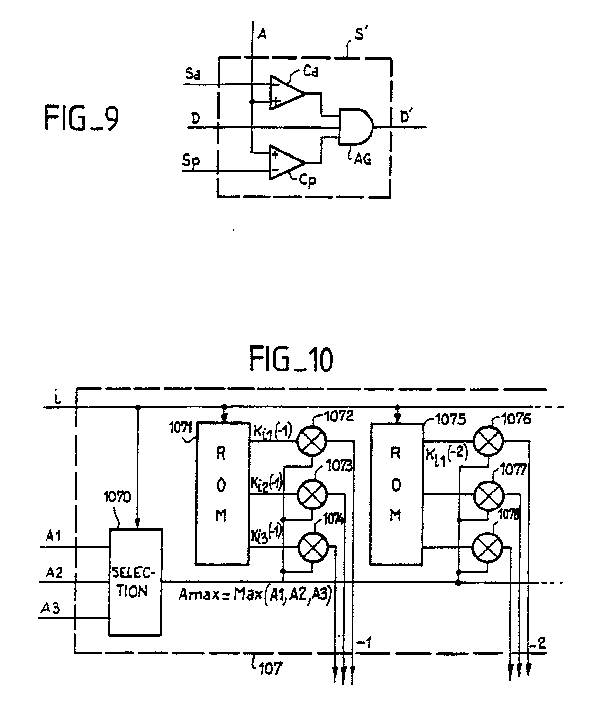

Un circuit de comparaison comporte, comme représenté sur la figure 9, deux comparateurs Ca, Cp, recevant l'amplitude A de la voie correspondante retardée de un à L temps élémentaire selon l'étage considéré et un seuil respectif dit antérieur $S_a$ ou postérieur $S_d$, et une porte "ET" AG recevant les sorties des comparateurs Ca et Cp et le bit de détection D de l'étage précédent et fournissant le nouveau bit de détection D'. Le bit D' vaut 1 si le bit D vaut 1 et si l'amplitude A est supérieure aux deux seuils Sa et Sp. Sinon, il prend la valeur 0.

Les seuils antérieurs, pour les retards R de -1 à -L, sont fournis par un générateur de seuils antérieurs 107 tandis que les seuils postérieurs, pour les retards R de +1 à +L, sont fournis par un générateur de seuils postérieurs 106.

Les seuils antérieurs sont élaborés à partir des amplitudes à l'entrée du dispositif et du rang de la voie contenant l'amplitude maximum. Les seuils postérieurs sont élaborés à partir des amplitudes apparaissant à la sortie du dispositif ainsi que du rang de la voie contenant en sortie l'amplitude maximum. Ce rang est obtenu en prévoyant une voie parallèle de progression du rang i fourni par le circuit 104 à travers L+1 registres R'' 117, 127 ... 157.

Les générateurs 106 et 107 sont de structure strictement identique.

Le générateur 107 est représenté partiellement sur la figure 10. Il comprend un circuit de sélection 1070 qui sélectionne, sous le contrôle du rang i venant du circuit 104, l'amplitude maximum Amax reçue à l'entrée. Par ailleurs le rang i adresse, pour chaque étage, une mémoire morte 1071, 1075 ... contenant tous les coefficients $K_{ij}$ pour le retard correspondant à l'étage considéré. Ainsi, la mémoire 1071 contient tous les coefficients $K_{ij}(-1)$ pour toutes les valeurs de i et de j, i correspondant à la voie présentant l'amplitude maximum. Les coefficients $K_{ij}$ sélectionnés (avec j variant de 1 à 3) sont envoyés à des multiplieurs 1072 à 1074, 1076 à 1078 ... qui calculent les produits $K_{ij} \cdot Amax = S_{ij}$ et fournissent donc les valeurs de seuil correspondantes.

Il est clair que le même circuit (circuit de sélection, mémoire morte et multiplieurs) est prévu pour le circuit 105.

Le fonctionnement du dispositif de la figure 8 apparaît ainsi clairement. Les amplitudes apparaissant à l'entrée du dispositif servent à calculer les seuils antérieurs qui sont comparés aux amplitudes antérieures correspondantes qui sont présentes dans les divers étages du dispositif, ce qui permet d'annuler les bits de détection d'amplitudes de pics secondaires détectés, lorsque l'amplitude maximum à l'entrée devient plus élevée. De même, les amplitudes apparaissant à la sortie du dispositif servent à calculer les seuils postérieurs qui sont comparés aux amplitudes correspondantes arrivées postérieurement et qui sont présentes dans les divers étages du dispositif ce qui permet d'annuler les bits de détection d'amplitudes de pics secondaires détectés, lorsque l'amplitude maximum à la sortie est notablement plus élevée.

Bien entendu, les exemples de réalisation décrits ne sont nullement limitatifs de l'invention.

## Revendications

1. Procédé pour la détection sans ambiguïté de distance, par un radar cohérent à impulsions modulées en phase, d'une cible présentant des éclairs de très courte durée et de période élevée, notamment des hélicoptères, caractérisé en ce qu'il consiste à :
   – émettre périodiquement un motif de N impulsions ayant toutes la même fréquence porteuse, cohérentes entre elles et modulées chacune en phase par une loi différente, lesdites impulsions d'un motif étant espacées entre elles de durées toutes différentes, voisines de la période du motif divisée par N et du même ordre de grandeur que la durée desdits éclairs ;
   – recevoir lesdites impulsions par un récepteur unique suivi de N voies de traitement adaptées respectivement auxdites lois de modulation pour effectuer une compression d'impulsion ; et
   – éliminer les pics secondaires reçus par comparaison des niveaux reçus dans chacune des voies.

2. Procédé selon la revendication 1, caractérisé en ce que lesdites lois de modulation utilisent des codes pseudo-orthogonaux.

3. Procédé selon l'une des revendications 1 ou 2, caractérisé en ce que, dans ledit récepteur unique, on procède à une élimination des échos de fouillis et de l'écho de corps de ladite cible.

4. Procédé selon l'une quelconque des revendications 1 à 3, caractérisé en ce que les espacements entre deux impulsions successives dudit motif sont choisies pour que, pendant la durée du motif, chaque distance soit observable dans un nombre minimum prédéterminé de voies.

5. Procédé selon la revendication 4, caractérisé en ce que, si chaque espacement entre deux impulsions successives dudit motif est exprimé sous forme numérique $T_i$ en fonction d'un pas de quantification $T_q$ égal au temps d'inobservabilité du radar lors de chaque émission d'une impulsion, lesdits espacements $T_i$, sont choisis tels que toutes les valeurs $T_i$, $T_i + T_{i\oplus 1}$, ... $T_i + T_{i\oplus 1} + ... + T_{i\oplus N\ominus 2}$ soient différentes, où i varie de 1 à N et où $\oplus$ et $\ominus$ symbolisent respectivement l'addition et la soustraction modulo N.

6. Procédé selon l'une quelconque des revendications 1 à 5, caractérisé en ce que l'étape d'éliminer les pics secondaires reçus consiste à :
   – comparer à chaque instant les amplitudes reçues dans les N voies de traitement entre elles pour déterminer la voie contenant l'amplitude maximum ;
   – déterminer un seuil dit simultané, L seuils antérieurs ($S_{aij}(R)$) et L seuils postérieurs ($S_{pij}(R)$) pour chaque voie à partir de ladite amplitude maximum ($A_i$), du rang (i) de la voie qui la reçoit et des valeurs des fonctions d'auto- et d'intercorrélation propres à chaque voie de traitement, L étant le nombre de moments de chaque loi de modulation ;
   – comparer les amplitudes reçues audit instant considéré auxdits seuils simultanés et auxdits seuils antérieurs et postérieurs correspondants déterminés respectivement pour les L instants antérieurs et postérieurs, pour décider que ladite amplitude maximum correspond effectivement à la détection d'un pic principal d'une cible si elle est supérieure à tous lesdits seuils auxquels elle est comparée.

7. Système radar cohérent à impulsions pour la détection sans ambiguïté de distance d'une cible présentant des éclairs de très courte durée et de période élevée, notamment des hélicoptères, ledit système mettant en oeuvre le procédé de détection selon l'une quelconque des revendications 1 à 6 et étant caractérisé en ce qu'il comprend :
   – un émetteur d'impulsions (3 à 5) à une fréquence porteuse donnée comportant des moyens de modulation en phase (4) desdites impulsions et des moyens (6) pour commander lesdits moyens de modulation de manière à appliquer, à chaque impulsion d'un motif de N impulsions, une loi de modulation en phase différente, lesdites impulsions modulées étant cohérentes entre elles ;
   – un récepteur unique (7) pour recevoir les signaux d'écho de ladite cible ;
   – des moyens (8) d'élimination cohérente des échos de fouillis et de l'écho de corps de ladite cible ;
   – N voies de traitement (9.1 à 9.N ; 10.1 à 10.N) pour effectuer une compression d'impulsion respectivement sur chacune des impulsions du motif par corrélation du signal reçu avec lesdites lois de phase respectives ; et

– un dispositif (11) d'élimination des pics secondaires dans lesdites voies de traitement pour délivrer seulement les pics principaux détectés.

8. Système radar cohérent à impulsions selon la revendication 7, caractérisé en ce que chaque voie de traitement comporte des moyens de corrélation (9.1 à 9.N) du signal reçu avec la loi de modulation de phase correspondante et un dispositif à seuil (10.1 à 10.N) pour éliminer le bruit résiduel.

9. Système radar cohérent à impulsions selon l'une des revendications 7 ou 8, caractérisé en ce que ledit dispositif (11) d'élimination des pics secondaires comprend :

 – des premiers moyens (104) pour déterminer à chaque instant celle (i) desdites voies qui fournit l'amplitude maximum (Ai) ;

 – des seconds moyens (105 ; 108 à 116) pour déterminer N seuils simultanés à partir de ladite amplitude maximum (Ai) et du rang de ladite voie (i) fournissant cette amplitude maximum, comparer lesdites amplitudes reçues dans les N voies auxdits seuils instantanés respectifs et transmettre l'amplitude dans chacune des voies et une indication de détection pour chacune des voies où l'amplitude est supérieure audit seuil simultané ;

 – des troisièmes moyens (118-120, 121-126 ... 151-156) pour stocker et décaler L amplitudes antérieurement reçues dans chacune desdites N voies de traitement, les comparer à chaque instant respectivement à L seuils antérieurs et L seuils postérieurs et stocker et décaler les résultats desdites comparaisons ;

 – des quatrièmes moyens (107) pour calculer lesdits seuils antérieurs à partir de ladite amplitude maximum reçue à l'instant considéré, du rang de la voie recevant cette amplitude maximum et des fonctions d'auto- et d'intercorrélation desdites lois de modulation de phase ;

 – des cinquièmes moyens (106) pour calculer lesdits seuils postérieurs à partir de l'amplitude maximum délivrée à la sortie desdits troisièmes moyens, du rang de la voie délivrant ladite amplitude maximum à la sortie des troisièmes moyens et desdites fonctions ; et

 – des sixièmes moyens (117, 127 ... 157) pour transférer vers lesdits cinquièmes moyens (106) le rang de la voie recevant l'amplitude maximum en synchronisme avec la progression de ladite amplitude dans lesdits troisièmes moyens.

10. Système radar cohérent à impulsions selon la revendication 9, caractérisé en ce que lesdits quatrièmes moyens (107) comprennent, pour la génération de chaque jeu de N seuils antérieurs correspondant à un rang antérieur donné (-1 à -L) par rapport aux amplitudes reçues par lesdits seconds moyens, une mémoire morte (1071) contenant les coefficients de seuil, adressée par le rang (i) de la voie recevant l'amplitude maximum et fournissant N coefficients sélectionnés, un circuit de sélection (1070) recevant lesdites amplitudes reçues sur les N voies et ledit rang et sélectionnant ladite amplitude maximum et N multiplieurs (1072 à 1074) recevant lesdits coefficients sélectionnés et ladite amplitude maximum et fournissant lesdits N seuils antérieurs.

11. Système radar cohérent à impulsions selon la revendication 9, caractérisé en ce que lesdits cinquièmes moyens (106) comprennent, pour la génération de chaque jeu de N seuils postérieurs correspondant à un rang postérieur donné (+1 à +L) par rapport aux amplitudes délivrées en sortie desdits troisièmes moyens, une mémoire morte contenant les coefficients de seuil, adressée par le rang de la voie délivrant l'amplitude maximum et fournissant N coefficients sélectionnés, un circuit de sélection recevant lesdites amplitudes délivrées sur les N voies et ledit rang délivré par lesdits sixièmes moyens et sélectionnant ladite amplitude maximum et N multiplieurs recevant lesdits coefficients sélectionnés et ladite amplitude maximum et fournissant lesdits N seuils postérieurs.

# FIG_1

# FIG_2

# FIG_3

# FIG_4

# FIG_5

EP 0 434 503 A1

FIG_6

FIG_7

$A_{11}(R) K_{11}(R)$

$A_{12}(R) K_{12}(R)$

$A_{13}(R) K_{13}(R)$

$A_{21}(R) K_{21}(R)$

$A_{22}(R) K_{22}(R)$

$A_{23}(R) K_{23}(R)$

EP 0 434 503 A1

FIG_8

EP 0 434 503 A1

13

## FIG_9

## FIG_10

$Amax = Max(A1, A2, A3)$

Office européen
des brevets

**RAPPORT DE RECHERCHE EUROPEENNE**

Numéro de la demande

EP 90 40 3543

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 275 396 (O.J. JACOMINI) * Colonne 4, ligne 24 - colonne 9, ligne 23; figures 1,2 * <br>--- | 1,7 | G 01 S 13/28<br>G 01 S 13/524<br>G 01 S 13/22<br>G 01 S 13/30 |
| Y | EP-A-0 336 273 (LICENTIA) * Abrégé; page 3, ligne 49 - page 8, ligne 29; figures 1-7 * <br>--- | 1,7 | |
| A | US-A-3 526 894 (R. GUILHEM et al.) * Colonne 4, ligne 1 - colonne 9, ligne 67; figures 1-4 * <br>--- | 1,7 | |
| A | EP-A-0 187 397 (H.S.A.) * Abrégé; figures 1,6A * <br>--- | 1,7 | |
| A | US-A-4 513 288 (G.D. WEATHERS et al.) * Colonne 3, lignes 11-45; colonne 4, ligne 61 - colonne 5, ligne 15; colonne 9, ligne 16 - colonne 10, ligne 25; figures 4,14 * <br>--- | 1,7 | |
| A | PROCEEDING OF THE 1988 IEEE NATIONAL RADAR CONFERENCE, Ann Arbor, Michigan, 20-21 avril 1988, pages 194-199, IEEE, New York, US; F.F. KRETSCHMER, Jr. et al.: "New radar pulse compression waveforms" <br>----- | | **DOMAINES TECHNIQUES RECHERCHES (Int. Cl.5)**<br><br>G 01 S |

Le présent rapport a été établi pour toutes les revendications

| Lieu de la recherche | Date d'achèvement de la recherche | Examinateur |
|---|---|---|
| LA HAYE | 11-03-1991 | VAN WEEL E.J.G. |